# EUROPÄISCHE PATENTSCHRIFT

(11) **EP 2 629 926 B1**
(45) Veröffentlichungstag und Bekanntmachung des Hinweises auf die Patenterteilung: **03.03.2021**
(21) Anmeldenummer: 11757182.8
(22) Anmeldetag: 10.09.2011
(51) Int. Cl.: B29C 65/58, B29C 65/78, B29C 65/72, B29C 65/00

(54) **VERBINDUNG ZWISCHEN ZWEI BAUTEILEN**
CONNECTION BETWEEN TWO COMPONENT PARTS
CONNEXION ENTRE DEUX ÉLÉMENTS D'ASSEMBLAGE

(30) Priorität: 22.10.2010 DE 102010042803
(43) Veröffentlichungstag der Anmeldung: 28.08.2013
(73) Patentinhaber: Bayerische Motoren Werke Aktiengesellschaft, 80809 München (DE)
(72) Erfinder: HERZINGER, Thomas, 80639 München (DE); VAN NIEKERK, Johann, 80993 München (DE)
(86) Internationale Anmeldenummer: PCT/EP2011/004561
(87) Internationale Veröffentlichungsnummer: WO 2012/052094

(56) Entgegenhaltungen:
- WO-A1-2012/009011
- DE-A1- 19 739 350
- DE-A1-102008 038 747
- FR-A1- 2 761 626
- US-A- 3 696 442

## Beschreibung

Die vorliegende Erfindung betrifft eine Bauteilverbindung gemäß dem Oberbegriff des Patentanspruches 1.

Eine derartige Bauteilverbindung ist aus der US 3 696 442 A bekannt.

Eng in Verbindung mit dem Gegenstand der vorliegenden Patentanmeldung stehen Bauteilverbindungen, die aus den beiden nicht vorveröffentlichten deutschen Patentanmeldungen DE 10 2010 028 323 A1 bzw. der DE 10 2010 040 547 A1 bekannt sind.

Zum relevanten Stand der Technik zählen ferner die DE 10 2009 049 602.5, DE 10 2008 038 747 A1, DE 10 2009 041 161 A1, DE 10 2010 028 322 A1, DE 10 2007 044 635A1, DE 10 2004 046 584 A1, DE 3302177 A1, US 4 942 539, US 2003/0090682 A1, EP 1 772 199 A1, US 5 150 623, DE 197 45 728 A1, DE 696 32 309 T2 sowie die DE 10 2007 061 803 B3, FR 2 761 626 A1 sowie die DE 197 39 350 A1.

In der Großserienfertigung von Fahrzeugkarosserien werden eine Vielzahl einzelner Karosserieteile sowie Anbauteile, wie z.B. Halterungen, etc. weitgehend vollautomatisiert von Robotern zusammengebaut. Bei einem Füge- bzw. Verbindungsvorgang werden zwei oder mehrere Karosserieteile zunächst mittels aufwändiger Spann- und Aufnahmetechnik relativ zueinander positioniert und anschließend miteinander verbunden, z.B. durch Schweißen, Clinchen oder durch andere Fügeverfahren.

Bei der eingangs erwähnten DE 10 2010 040 547 DE geht es um eine steckbare Klemmverbindung, mittels der zwei oder mehr Karosseriebauteile in einfacher Weise (vor-)montiert werden können. Von einem ersten der mindestens zwei Bauteile steht ein "männliches Fixierteil" ab, das in einer Einführrichtung in ein lochartiges, an dem anderen Fahrzeugbauteil vorgesehenes "weibliches Fixierelement" eingeführt wird. Das männliche Fixierelement weist einen Funktionskopf auf, der teilweise oder ganz die Form einer Kugel oder teilweise oder ganz eine kugelähnliche Form hat und der im Wesentlichen quer zur Einführrichtung ein Übermaß in Bezug auf das weibliche Fixierelement aufweist, so dass die beiden Fahrzeugkarosseriebauteile an den Fixierelementen aneinander geklemmt sind.

Im Fahrzeugkarosseriebau werden miteinander zu verbindende Karosserieteile üblicherweise mittels "bauteilspezifischer" Haltevorrichtungen zusammengehalten und anschließend gefügt. "Bauteilspezifisch" bedeutet, dass die betreffenden Einrichtungen individuell auf die Geometrie eines bestimmten Bauteils bzw. zweier miteinander zu verbindender Bauteile hin konstruiert und konzipiert sind. Wenn die miteinander zu verbindenden Bauteile keine hinreichende Eigensteifigkeit aufweisen, d.h. nach dem Abpressen in einem Umformwerkzeug ein "Aufsprungverhalten" zeigen, muss die Geometrie eines herzustellenden Bauteilverbunds durch geometriespezifische Auflagepunkte in einer betreffenden Haltevorrichtung bestimmt werden. Erst durch Anschweißen eines weiteren Bauteils kann die mittels der Haltevorrichtung eingestellte Geometrie dann fixiert werden.

Derartige Haltevorrichtungen sind mit hohen Anschaffungsinvestitionen verbunden. Im Betrieb belegen sie kostbare Produktionsfläche, was wiederum mit Kosten verbunden ist.

Aufgabe der Erfindung ist es, eine Bauteilverbindung zu schaffen, die eine Vorfixierung zweier dauerhaft fest miteinander zu verbindender Bauteile ermöglicht, ohne dass für die dauerhaft feste Verbindung bauteilspezifische Haltevorrichtungen benötigt werden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Bauteilverbindung mit einem ersten Bauteil und einem zweiten Bauteil, die über mindestens zwei beabstandet voneinander angeordnete Fixierelementpaare lösbar miteinander verbunden sind. Der Begriff "Bauteil" ist äußerst breit zu interpretieren. Er umfasst insbesondere aber nicht ausschließlich flächige Bauteile, wie z.B. Stahl- oder Aluminiumblechbauteile. Bei den Bauteilen kann es sich insbesondere um Karosseriebauteile einer zu fertigenden Fahrzeugkarosserie handeln.

Jedes der mindestens zwei Fixierelementpaare weist ein weibliches Fixierelement und ein in das weibliche Fixierelement eingeführtes, insbesondere eingestecktes, männliches Fixierelement auf. Jeweils ein Fixierelement eines jeden Fixierelementpaares ist an dem ersten Bauteil und das andere Fixierelement eines jeden Fixierelementpaares ist an dem zweiten Bauteil vorgesehen.

Beispielsweise können die männlichen Fixierelemente an dem ersten Bauteil und die weiblichen Fixierelemente an dem zweiten Bauteil vorgesehen sein.

Alternativ dazu ist es aber auch möglich, dass das männliche Fixierelement des ersten Fixierelementpaares an dem ersten Bauteil und das zugeordnete weibliche Fixierelement an dem zweiten Bauteil sowie das männliche Fixierelement des zweiten Fixierelementpaars an dem zweiten Bauteil und das zugeordnete weibliche Fixierelement des zweiten Fixierelementpaars an dem ersten Bauteil angeordnet ist, oder umgekehrt.

Der Kern der Erfindung besteht darin, dass die Fixierelemente derart angeordnet sind, dass sich beim lösbaren Verbinden der beiden Bauteile mittels der Fixierelementpaare in den beiden Bauteilen eine die Bauteile biegende bzw. krümmende Biegespannung ergibt.

Auf diese Weise kann ein aus zwei oder mehreren Bauteilen hergestellter Bauteilverbund lösbar "aufgebaut" werden. Durch das lösbare Verbinden zweier oder mehrerer Bauteile kann in dem Bauteilverbund gezielt eine "Biegespannung" aufgebracht werden, die herkömmlicherweise nur mittels einer bauteil- bzw. bauteilverbundspezifischen Haltevorrichtung aufgebracht werden kann.

So besteht beispielsweise eine Tür eines Fahrzeugs aus mehreren miteinander zu verbindenden Blechen, insbesondere aus einem Außenhautblech und mehreren damit zu verbindenden Strukturblechen. Bevor die einzelnen Bleche miteinander verschweißt werden, müssen die einzelnen Bleche relativ zueinander vorfixiert werden, was in sehr einfacher Weise mittels der oben beschriebenen Bauteilverbindung möglich ist, ohne dass hierfür bauteil- bzw. bauteilverbundspezifische Haltevorrichtungen benötigt werden.

Die Fixierelemente sind erfindungsgemäß so angeordnet dass sich beim lösbaren Verbinden der mindestens zwei Bauteile mittels der Fixierelementpaare in den beiden Bauteilen eine die Bauteile im Bereich zwischen den Fixierelementpaaren biegende bzw. krümmende Biegespannung ergibt.

Die Fixierelemente sind erfindungsgemäß so angeordnet dass der entlang einer Oberfläche des ersten Bauteils gemessene Abstand der an dem ersten Bauteil vorgesehenen Fixierelemente sich von dem entlang einer Oberfläche des zweiten Bauteils gemessenen Abstand der an dem zweiten Bauteil vorgesehenen Fixierelemente (geringfügig) unterscheidet. Durch einen derartigen geringfügigen Abstandsunterschied ergibt sich beim Verbinden der einander zugeordneten Fixierelemente "automatisch" eine Krümmung bzw. Biegung der beiden Bauteile.

Das lösbare aneinander Fixieren der beiden Bauteile erfolgt so, dass das eine Fixierelement entlang einer Einführrichtung an das an dem anderen Bauteil vorgesehene andere Fixierelement herangeführt bzw. in das an dem anderen Bauteil vorgesehene Fixierelement eingeführt und festgeklemmt wird. Nach dem lösbaren Verbinden der beiden Bauteile sind diese in Richtungen quer zu der Einführrichtung unverschieblich relativ zueinander (lösbar) fixiert.

Die Fixierelemente können so ausgebildet sein, dass sie eine Clip- oder Schnappverbindung bilden. Es kann vorgesehen sein, dass das eine Fixierelement an dem anderen Fixierelement eingerastet wird bzw. dass das eine Fixierelement in eine das andere Fixierelement hintergreifende Position gebracht wird. Zwischen den Fixierelementen kann also ein entgegen der Einführrichtung wirkender Formschluss vorgesehen sein. Ein derartiger Formschluss bzw. Hinterschnitt muss aber nicht notwendigerweise vorgesehen sein.

Die beiden Bauteile können mittels eines Fixierelementpaars rein kraftschlüssig aneinander geklemmt werden. Alternativ dazu können die beiden Bauteile mittels eines Fixierelementpaars kraftschlüssig und formschlüssig aneinander geklemmt werden.

Nach dem lösbaren (Vor-)Fixieren der beiden Bauteile über die Fixierelemente können die Bauteile unlösbar miteinander verbunden werden, z.B. durch Verschweißen. Ein wesentlicher Vorteil der Erfindung ist darin zu sehen, dass für das unlösbare Verbinden keine weiteren Spann- bzw. Klemmvorrichtungen benötigt werden, welche (während des z.B. Schweißvorgangs) die beiden Bauteile zusammendrücken. Vielmehr genügt es, dass die beiden Bauteile vor bzw. während des Verschweißens ausschließlich durch die lösbar miteinander verbundenen Fixierelemente relativ zueinander gehalten werden.

Nach einer Weiterbildung der Erfindung wird als erstes Fixierelement ein "männliches Fixierelement" verwendet, d.h. ein Element, das von dem ersten Bauteil in irgendeiner Weise "absteht". Bei dem zweiten Fixierelement handelt es sich vorzugsweise um ein mit dem männlichen Fixierelement zusammenwirkendes weibliches Fixierelement. Durch Zusammen- bzw. Ineinanderstecken der beiden Fixierelemente können die Bauteile aneinander geklemmt werden. Der Begriff "weibliches Fixierelement" ist ebenfalls äußerst breit auszulegen. Gemeint sind konstruktive Gestaltungen, die es ermöglichen, das männliche Fixierelement in einer Einführrichtung in das weibliche Fixierelement einzuführen. Die (Fahrzeug-)Bauteile können also, ähnlich wie dies von Steckbaukästen aus dem Spielwarenbereich bekannt ist, einfach zusammengesteckt und auf diese Weise relativ zueinander (vor-)fixiert werden.

Das männliche Fixierelement weist im Wesentlichen quer zur Einführrichtung ein Übermaß in Bezug auf das weibliche Fixierelement auf, wodurch die beiden Bauteile nach dem Zusammenstecken an den Fixierelementen aneinander geklemmt werden.

Nach einer Weiterbildung der Erfindung wird als erstes Fixierelement ein Element verwendet, welches als kugelförmiges oder kugelähnliches Element ausgebildet ist oder welches einen kugelförmigen oder kugelähnlichen Abschnitt aufweist. Das männliche Fixierelement kann vollständig aus Metall, insbesondere aus Stahl oder Aluminium bestehen. Es kann beispielsweise stoffschlüssig mit dem ersten Bauteil verbunden werden, z.B. durch Verschweißen. Insbesondere kann eine als erstes Fixierelement fungierende Kugel unmittelbar auf das erste Bauteil aufgeschweißt werden.

Alternativ dazu kann auch ein erstes Fixierelement verwendet werden, welches einen Funktionskopf aufweist, der teilweise oder ganz die Form einer Kugel oder ganz oder teilweise eine kugelähnliche Form hat und einen mit dem Funktionskopf (z. B. einstückig) verbundenen Fußbereich. Der Fußbereich kann z.B. mittels eines kalten Fügeverfahrens (z.B. Stanznieten, Einpressen) formschlüssig mit dem ersten Bauteil verbunden werden.

Der oben verwendete Begriff "kugelähnlich" ist ebenfalls sehr breit zu interpretieren und nicht auf den mathematischen Begriff einer Kugelgeometrie beschränkt. "Kugelähnlich" kann z.B. "konvex gewölbt" bedeuten. Vorzugsweise ist das kugelförmige oder kugelähnlich gestaltete männliche Fixierelement rotationssymmetrisch bezüglich einer Normalenrichtung eines oder beider Fahrzeugbauteile an der Stelle des männlichen Fixierelements. Die Begriffe "kugelartig" oder "kugelähnlich" umfassen ganz allgemein "runde" bzw. "gewölbte", insbesondere "konvex gewölbte" Geometrien".

Ein derart gestaltetes männliches Fixierelement kann sehr mit dem zweiten (Fahrzeug-)Bauteil zusammengesteckt werden. Durch eine runde, kantenlose Geometrie des männlichen Fixierelements minimiert sich die Gefahr, dass sich die beiden (Fahrzeug-)Bauteile beim Zusammenstecken ungewollt verkannten.

Wird ein erstes Fixierelement verwendet, das durch einen Funktionskopf und einen damit verbundenen Fußbereich gebildet ist, so kann der Fußbereich, ganz allgemein gesprochen, die Funktion eines Verbindungselements übernehmen, über welches der Funktionskopf mit dem ersten Bauteil verbunden wird.

Der Fußbereich kann kostengünstig als "Einpresselement" ausgebildet sein. Er kann mit gängigen Einpressverfahren (wie z.B. Stanznieten) hochpräzise in das zweite Bauteil "eingepresst" werden, derart, dass sich durch das Einpressen eine unlösbare, d.h. eine dauerhaft feste, formschlüssige Verbindung mit dem ersten Bauteil ergibt. Der Fußbereich kann z.B. als selbststanzender Niet ausgeführt sein. Das Einpressen des Fußabschnitts kann vollautomatisiert mittels einer entsprechenden Robotereinrichtung durchgeführt werden.

Alternativ dazu kann eine Einpresseinrichtung in ein Umformwerkzeug integriert sein. Beispielsweise kann in ein Tiefziehwerkzeug eine Stanznieteinrichtung integriert sein, die es ermöglicht, während oder gegen Ende eines Tiefziehvorgangs, durch den das erste (Blech-)Bauteil dreidimensional umgeformt wird, das männliche Fixierelement zu setzen. Alternativ dazu könnte der Fußbereich auch als Schraubenschaft ausgeführt und dazu bestimmt sein, in eine zugeordnete Gewindebohrung des ersten Bauteils eingeschraubt zu werden.

(Fahrzeug-)Bauteile, wie z.B. einzelne Karosserieteile, können durch ein oder mehrere derartige Fixierelementpaare miteinander verbunden, d.h. (vor-)montiert werden. Die einzelnen Bauteile brauchen dabei lediglich "zusammengesteckt" werden. Je nach Art der (Fahrzeug-)Bauteile und der konstruktiv vorgesehenen "Klemmkraft" können die beiden (Fahrzeug-)Bauteile ausschließlich über derartige Fixierelementpaare miteinander verbunden sein oder zusätzlich über eine oder mehrere andere Verbindungstechniken, wie z.B. Schweißen, Schrauben, Nieten, Clinchen, etc. In Betracht kommen dabei insbesondere auch solche Verbindungstechniken, die von einer einzigen Bauteilseite her durchführbar sind ("einseitige Verbindungsverfahren"). Exemplarisch sei hier das Laserschweißen genannt, bei dem im Unterschied zu Punktschweißverfahren der "Bauteilverbund" nicht von beiden Seiten her mittels einer Schweißzange zugänglich sein muss, sondern von einer einzigen Seite her gearbeitet werden kann.

Das weibliche Fixierelement kann durch ein in dem zweiten (Fahrzeug-)Bauteil vorgesehenes "Durchgangsloch" gebildet sein. Der Begriff "Durchgangsloch" ist breit zu interpretieren und nicht per se auf eine bestimmte Lochgeometrie beschränkt. Das Durchgangsloch kann z.B. kreisförmig sein oder eine von einer Kreisform abweichende Geometrie aufweisen, wie z.B. eine im Wesentlichen quadratische Geometrie, eine drei-, vier- oder mehreckförmige Geometrie, wobei die "Ecken" ausgerundet sein können.

Da das mindestens eine männliche Fixierelement quer zur Einführrichtung ein gewisses Übermaß in Bezug auf das weibliche Fixierelement aufweist, müssen die beiden Fixierelemente - oder zumindest eines der beiden Fixierelemente - eine gewisse "Mindestelastizität" aufweisen, so dass das Zusammenstecken ermöglicht wird und nach dem Zusammenstecken eine hinreichende Klemmkraft bestehen bleibt.

Bei dem männlichen Fixierelement bzw. bei dem Funktionskopf des männlichen Fixierelements kann es sich z.B. um eine Kugel aus Vollmaterial handeln, insbesondere um eine Stahl- oder Aluminiumkugel. Eine derartige "Vollkugel" weist eine vergleichsweise geringe Elastizität auf. Die für ein Zusammenstecken erforderliche Mindestelastizität kann durch eine entsprechende Gestaltung des weiblichen Fixierelements erreicht werden.

Es kann vorgesehen sein, dass die beiden (Fahrzeug-)Bauteile nach dem Zusammenstecken an den Fixierelementen in Richtungen, die quer zur Einführrichtung sind, spielfrei miteinander verbunden, d.h. unverschieblich relativ zueinander fixiert sind.

Nach einer Weiterbildung der Erfindung ist an einem Rand des das weibliche Fixierelement bildenden Durchgangslochs mindestens ein von dem zweiten (Fahrzeug-)Bauteil abstehendes, biegeelastisches Klemmelement vorgesehen. Das Klemmelement übt von außen her eine im Wesentlichen quer zur Einführrichtung wirkende Klemmkraft auf eine Außenseite des Funktionskopfs des männlichen Fixierelements aus. Das Klemmelement kann den Funktionskopf des männlichen Fixierelements hintergreifen. Dies muss aber nicht unbedingt der Fall sein. Im Falle eines Hinterschnitts kommt es beim Zusammenfügen, d.h. beim Zusammenstecken der beiden Fixierelemente zu einem "Überdrücken" und somit zu einem hörbaren Einrasten des Funktionskopfs des männlichen Fixierelements in bzw. an dem weiblichen Fixierelement.

Bei dem Klemmelement kann es sich um einen sich entlang des gesamten Rands des Durchgangslochs erstreckenden Klemmkragen handeln. Alternativ dazu kann auch lediglich ein sich über einen Umfangsabschnitt erstreckendes Klemmkragenelement vorgesehen sein. Ferner können entlang des Durchgangslochs mehrere in Umfangsrichtung voneinander beabstandete Klemmkrägen vorgesehen sein, die den Funktionskopf des männlichen Fixierelements jeweils auf einem Umfangsabschnitt oder jeweils an einer Umfangsstelle von außen her berühren. Es kann auch vorgesehen sein, dass lediglich ein Teil der vorgesehenen Klemmkrägen von außen her gegen den Funktionskopf des männlichen Fixierelements drückt.

Es kann vorgesehen sein, dass der Klemmkragen bzw. die Klemmkrägen in Einführrichtung bzw. entgegen der Einführrichtung von dem zweiten (Fahrzeug-)Bauteil absteht bzw. abstehen. Der mindestens eine Klemmkragen muss nicht ganz senkrecht in Bezug auf das zweite Fahrzeugteil umgebogen werden, sondern kann leicht schräg angestellt werden. Beispielsweise kann vorgesehen sein, dass der mindestens eine Klemmkragen mit der Oberfläche des zweiten (Fahrzeug-)Bauteils im Bereich des Durchgangslochs einen Winkel einschließt, der im Bereich zwischen 80° und 90° liegt.

Bei dem ersten und/oder bei dem zweiten (Fahrzeug-)Bauteil kann es sich um ein Blechbauteil, insbesondere um ein Karosseriebauteil, handeln. Alternativ dazu kann es sich bei dem ersten und/oder bei dem zweiten (Fahrzeug-)Bauteil auch um ein Kunststoffbauteil, insbesondere um ein aus einem faserverstärkten Kunststoff bestehendes Kunststoffbauteil handeln.

Das das weibliche Fixierelement bildende Durchgangsloch kann aus dem zweiten (Fahrzeug-)Bauteil ausgestanzt sein. Bei dem Klemmkragen kann es sich um einen "umgebogenen" bzw. "hochgestellten" oder hochstehenden Abschnitt des ausgestanzten Durchgangslochs handeln.

Bei einem oder bei beiden der Fahrzeugteile kann es sich insbesondere um Tiefziehteile handeln. Das mindestens eine weibliche Fixierelement, das z.B. durch ein Durchgangsloch gebildet sein kann, kann unmittelbar im Tiefziehwerkzeug ausgestanzt oder in einem nachfolgenden Fertigungsschritt hergestellt werden.

Im Folgenden wird die Erfindung im Zusammenhang mit der Zeichnung näher erläutert. Es zeigen:
- Figur 1: Ein Blech mit einer aufgeschweißten Stahlkugel;
- Figuren 2, 3: ein Blech mit einem Durchgangsloch mit umlaufenden Klemmkragen;
- Figuren 4-6: verschiedene Ausführungsbeispiele mit unterschiedlichen Klemmkrägen;
- Figur 7: ein erstes Ausführungsbeispiel eines männlichen Fixierelements ;
- Figur 8: ein zweites Ausführungsbeispiel eines männlichen Fixierelements ; und
- Figur 9 u. 10: zeigen eine Bauteilverbindung gemäß der Erfindung vor bzw. nach dem losen Verbinden der beiden Bauteile.

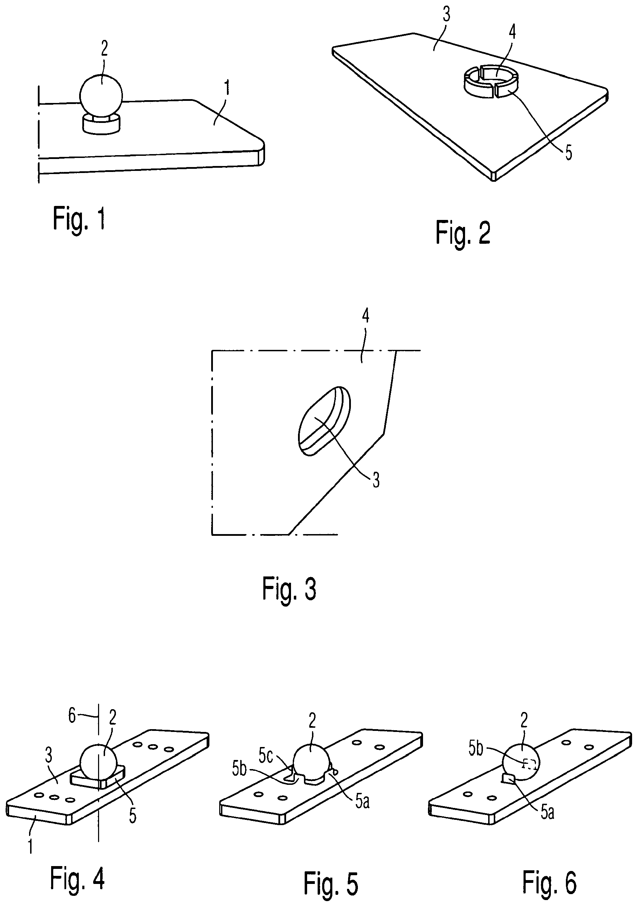

Figur 1 zeigt ein erstes Blech 1, auf dem ein männliches Fixierelement fixiert ist, das einen als Stahlkugel 2 ausgebildeten Funktionskopf aufweist.

Die Figuren 2, 3 zeigen ein zweites Blech 3, in das ein Durchgangsloch 4 gestanzt ist, welches einen umgebogenen Kragen 5 aufweist, der als Klemmkragen fungiert. Das Durchgangsloch 4 bzw. der Klemmkragen 5 haben einen geringfügig kleineren Durchmesser als die den Funktionskopf bildende Kugel 2. Der Klemmkragen ist jedoch hinreichend elastisch, so dass die Kugel 2 in bzw. durch das Durchgangsloch 4 gedrückt werden kann.

Das Durchgangsloch 4 kann, wie in den Figuren 2, 3 gezeigt, eine annähernd viereckige bzw. quadratische Form haben. Im Falle einer annähernd quadratischen Durchgangslochgeometrie, drückt der Klemmkragen 5 punktförmig an vier jeweils ca. 90° voneinander beabstandeten Stellen von außen her gegen die Kugel 2.

Figur 4 zeigt die beiden Bleche 1, 3 in zusammengestecktem Zustand. Die an dem Blech 1 fixierte Kugel wurde von unten her durch das Durchgangsloch 4 hindurchgesteckt. Der Klemmkragen 5 drückt im Wesentlichen quer zu einer Einführrichtung 6 von außen her gegen die Kugel 2. Die beiden Bleche 1, 3 sind damit in Richtungen, die quer zur Einführvorrichtung 6 sind, fest und im Wesentlichen spielfrei relativ zueinander positioniert.

Figur 5 zeigt ein Ausführungsbeispiel, bei dem anstatt eines umlaufenden Klemmkragens in Umfangsrichtung gleichmäßig verteilt mehrere zahnartige Klemmkragenelemente 5a, 5b, 5c vorgesehen sind.

Beim Ausführungsbeispiel der Figur 6 sind lediglich zwei derartige zahnartige Klemmkragenelemente 5a, 5b vorgesehen, die in Umfangsrichtung ca. 180° voneinander beabstandet sind. Die beiden Klemmkragenelemente 5a, 5b sind auf einander gegenüberliegenden Seiten der Kugel 2 angeordnet.

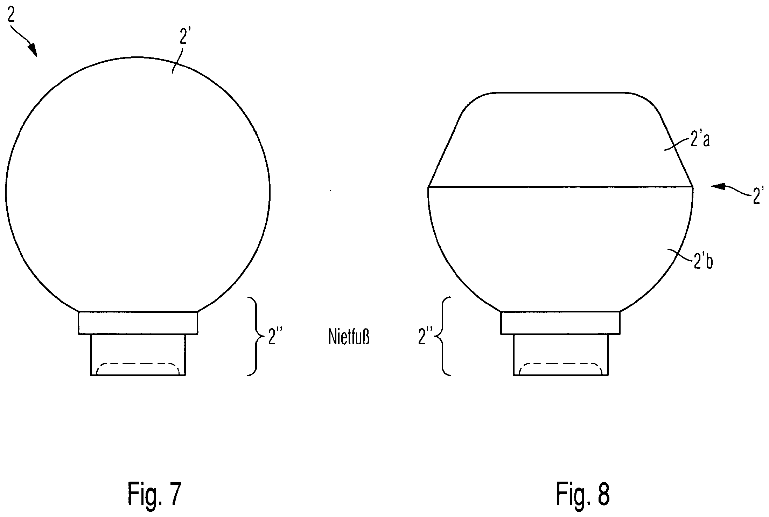

Figur 7 zeigt ein männliches Fixierelement 2, welches einen kugelförmigen Funktionskopf 2' und einen einstückig damit verbundenen Fußbereich bzw. Fußabschnitt 2" aufweist. Der Fußbereich 2" ist hier in der Form eines (selbststanzenden) Stanzniets ausgebildet. Beim Setzen, d.h. beim Einpressen des als Stanzniet ausgebildeten Fußbereichs 2", dringt der stirnseitige Bereich des Fußbereichs 2" in das erste Blech 1 (vgl. Figur 1) ein und weitet sich dabei radial auf, wodurch sich eine dauerhaft feste, formschlüssige Verbindung mit dem ersten Blech 1 ergibt.

Figur 8 zeigt ein Ausführungsbeispiel, bei dem der Funktionskopf 2' einen oberen, konisch nach oben hin zulaufenden, gerundeten Bereich 2'a und einen sich nach unten daran anschließenden kugelförmigen Bereich 2'b aufweist, der analog zum Ausführungsbeispiel der Figur 8 als Stanzniet ausgebildet ist.

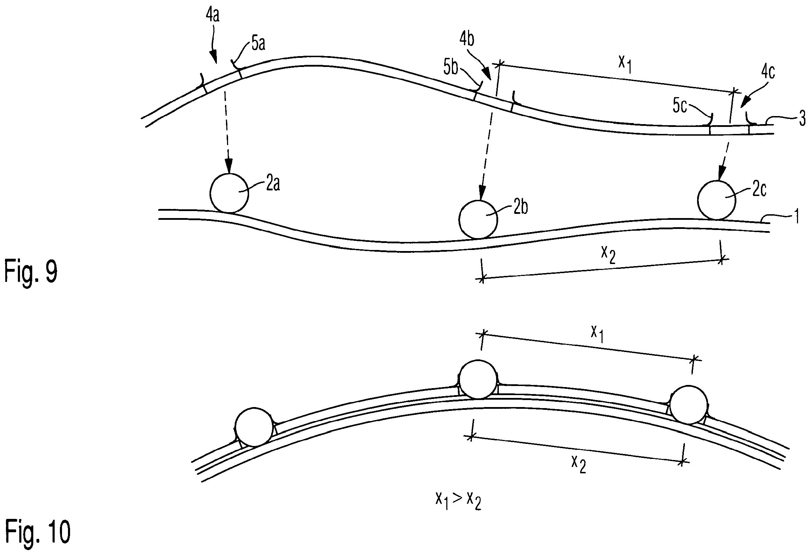

Figur 9 zeigt lose miteinander zu verbindende Bauteile 1, 3. Auf einer Oberseite des ersten Bauteils 1 sind beabstandet voneinander drei Kugeln 2a, 2b, 2c angeordnet. Die Kugeln 2a, 2c können auf die Oberseite des ersten Bauteils 1 aufgeschweißt sein. In dem zweiten Bauteil 3 sind den Kugeln 2a - 2c zugeordnete Durchgangslöcher 4a, 4b, 4c angeordnet, die jeweils mit einem Klemmkragen versehen sind. Die Durchgangslöcher 4b und 4c haben beispielsweise einen Abstand von x₁. Die zugeordneten Kugeln 2b, 2c haben einen Abstand x₂, der etwas kleiner als der Abstand x₁ ist.

Wie aus Figur 10 ersichtlich ist, führt dies dazu, dass beim Zusammenstecken der beiden Bleche 1, 3 sich ein Biegemoment ergibt, das die beiden Bleche 1, 3 entsprechend krümmt.

## Patentansprüche

1. Bauteilverbindung, mit
• einem ersten Bauteil (1),
• einem zweiten Bauteil (3),
• mindestens zwei beabstandet voneinander angeordneten Fixierelementpaaren (2a, 4a; 2b, 4b; 2c, 4c), mittels der die beiden Bauteile (1, 3) lösbar miteinander verbunden sind, wobei
∘ jedes Fixierelementpaar (2a, 4a; 2b, 4b; 2c, 4c) durch ein weibliches Fixierelement (4a, 4b, 4c) und ein in das weibliche Fixierelement (4a, 4b, 4c) eingeführtes, insbesondere eingestecktes, männliches Fixierelement (2a, 2b, 2c) gebildet ist, und
∘ jeweils ein Fixierelement (2a - 2c) eines jeden Fixierelementpaares (2a, 4a; 2b, 4b; 2c, 4c) an dem ersten Bauteil (1) und das andere Fixierelement (4a -4c) eines jeden Fixierelementpaares (2a, 4a; 2b, 4b; 2c, 4c)an dem zweiten Bauteil (3) vorgesehen ist,
wobei die Fixierelemente (2a - 2c; 4a - 4c) so angeordnet sind, dass sich beim lösbaren Verbinden der beiden Bauteile (1, 3) mittels der Fixierelementpaare (2a, 4a; 2b, 4b; 2c, 4c) in den beiden Bauteilen (1, 3) eine die Bauteile (1, 3) biegende Biegespannung ergibt,
**dadurch gekennzeichnet, dass**
• die Fixierelemente (2a - 2c; 4a - 4c) derart angeordnet sind, dass der entlang einer Oberfläche des ersten Bauteils (1) gemessene Abstand (X2) der an dem ersten Bauteil (1) vorgesehenen Fixierelemente (2b, 2c) sich von dem entlang einer Oberfläche des zweiten Bauteils (3) gemessenen Abstand (xi) der an dem zweiten Bauteil vorgesehenen zugeordneten Fixierelemente (4b, 4c) unterscheidet, wobei sich beim lösbaren Verbinden der beiden Bauteile (1, 3) mittels der Fixierelementpaare (2a, 4a; 2b, 4b; 2c, 4c) in den beiden Bauteilen (1, 3) eine die Bauteile (1, 3) im Bereich zwischen den Fixierelementpaaren (2a, 4a; 2b, 4b; 2c, 4c) biegende Biegespannung ergibt.

2. Bauteilverbindung nach Anspruch 1,
**dadurch gekennzeichnet, dass** das männliche Fixierelement (2a - 2c) eines jeden Fixierelementpaars (2a, 4a; 2b, 4b; 2c, 4c) entlang einer Einführrichtung (6) in das an dem anderen Bauteil (3) vorgesehene weibliche Fixierelement (4a, 4c) eingeführt und daran festgeklemmt ist.

3. Bauteilverbindung nach einem der Ansprüche 1 oder 2,
**dadurch gekennzeichnet, dass** die beiden Bauteile (1, 3) nach dem lösbaren Verbinden in Richtungen quer zur den Einführrichtungen (6) unverschieblich relativ zueinander fixiert sind.

4. Bauteilverbindung nach einem der vorangehenden Ansprüche,
**dadurch gekennzeichnet, dass** die Fixierelemente einer jeden Bauteilverbindung eine Clip- oder Schnappverbindung bilden, wobei die Fixierelemente eines jeden Fixierelementpaares (2a, 4a; 2b, 4b; 2c, 4c) aneinander eingerastet sind bzw. einander formschlüssig hintergreifen.

5. Bauteilverbindung nach einem der vorangehenden Ansprüche,
**dadurch gekennzeichnet, dass** die Fixierelemente eines jeden Fixierelementpaares (2a, 4a; 2b, 4b; 2c, 4c) kraftschlüssig aneinander geklemmt sind.

6. Bauteilverbindung nach einem der vorangehenden Ansprüche, **dadurch gekennzeichnet, dass** die Fixierelemente eines jeden Fixierelementpaares (2a, 4a; 2b, 4b; 2c, 4c) kraftschlüssig und formschlüssig aneinander geklemmt sind.

7. Bauteilverbindung nach einem der vorangehenden Ansprüche,
**dadurch gekennzeichnet, dass** männliche Fixierelement (2a, 2c) eines jeden Fixierelementpaares (2a, 4a; 2b, 4b; 2c, 4c) ein Übermaß in Bezug auf das zugeordnete weibliche Fixierelement (4a -4c) aufweist.

8. Bauteilverbindung nach einem der Ansprüche 1 bis 7,
**dadurch gekennzeichnet, dass** mindestens eines der männlichen Fixierelemente mindestens eines der Fixierelementpaare (2a, 4a; 2b, 4b; 2c, 4c) ganz oder teilweise kugelförmig oder kugelähnlich ist oder einen kugelförmigen oder kugelähnlichen Abschnitt aufweist.

9. Bauteilverbindung nach einem der Ansprüche 1 bis 8,
**dadurch gekennzeichnet, dass** mindestens eines der männlichen Fixierelemente (2a - 2c) mindestens eines der Fixierelementpaare (2a, 4a; 2b, 4b; 2c, 4c) ein vollständig aus Metall, insbesondere aus Stahl oder Aluminium, bestehendes Element ist.

10. Bauteilverbindung nach einem der Ansprüche 1 bis 9,
**dadurch gekennzeichnet, dass** mindestens eines der männlichen Fixierelemente mit einem der beiden Bauteile (1) verschweißt ist.

11. Bauteilverbindung nach einem der vorangehenden Ansprüche,
**dadurch gekennzeichnet, dass** mindestens eines der männlichen Fixierelemente (2)
• einen Funktionskopf (2') aufweist, der teilweise oder ganz die Form einer Kugel oder ganz oder teilweise eine kugelähnliche Form hat und
• einen mit dem Funktionskopf (2') verbundenen Fußabschnitt (2").

12. Bauteilverbindung nach Anspruch 11,
**dadurch gekennzeichnet, dass** der Fußabschnitt (2") mittels eines kalten Fügeverfahrens mit einem der beiden Bauteile (1) verbunden wurde.

13. Bauteilverbindung nach einem der vorangehenden Ansprüche,
**dadurch gekennzeichnet, dass** das weibliche Fixierelement (4a - 4c) mindestens eines der Fixierelementpaare (2a, 4a; 2b, 4b; 2c, 4c) teilweise oder ganz durch ein in einem der beiden Bauteile (1, 3) vorgesehenes Durchgangsloch gebildet ist.

14. Bauteilverbindung nach Anspruch 13,
**dadurch gekennzeichnet, dass** das Durchgangsloch (4a - 4c) eine von einer Kreisform abweichende Form aufweist.

15. Bauteilverbindung nach einem der Ansprüche 13 oder 14,
**dadurch gekennzeichnet, dass** das Durchgangsloch (4a - 4c) einem Quadrat oder einem Dreieck ähnelt.

16. Bauteilverbindung nach einem der Ansprüche 13, 14 oder 15,
**dadurch gekennzeichnet, dass** bei der Herstellung des Durchgangslochs (4a - 4c) ein Rand (5a, 5c) des Durchgangslochs (4a - 4c) umgebogen wurde und ein von dem betreffenden Bauteil (3) abstehendes, biegeelastisches Klemmelement (5a, 5c) bildet, das von außen her eine im Wesentlichen quer zur Einführrichtung wirkende Klemmkraft auf eine Außenseite des zugeordneten männlichen Fixierelements (2a - 2c) ausübt.

17. Bauteilverbindung nach einem der Ansprüche 13, 14, 15 oder 16,
**dadurch gekennzeichnet, dass** das Durchgangsloch (4a - 4c) aus einem der beiden Bauteile (3) ausgestanzt ist.

18. Bauteilverbindung nach Anspruch 16,
**dadurch gekennzeichnet, dass** es sich bei dem mindestens einen Klemmelement (5a - 5c) um einen umgebogenen Abschnitt eines der beiden Bauteile (3) handelt.

19. Bauteilverbindung nach einem der Ansprüche 16 oder 18,
**dadurch gekennzeichnet, dass** nach dem Zusammenstecken der beiden Bauteile (1, 3) das mindestens eine Klemmelement (5a - 5c) und das damit zusammenwirkende zugeordnete männliche Fixierelement (2a - 2c) hintergreift.

20. Bauteilverbindung nach einem der Ansprüche 16, 18 oder 19,
**dadurch gekennzeichnet, dass** es sich bei dem Klemmelement (5a - 5c) um einen sich entlang des gesamten Rands des Durchgangslochs (4a - 4c) erstreckenden Klemmkragen handelt.

21. Bauteilverbindung nach einem der Ansprüche 13 bis 20,
**dadurch gekennzeichnet, dass** entlang des Rands des Durchgangslochs (4a - 4c) mehrere in Umfangsrichtung voneinander beabstandete Klemmkrägen (5a, 5b, 5c) vorgesehen sind, die auf einem Umfangsabschnitt das zugeordnete männliche Fixierelement (2, 2a, 2b) von außen her berühren.

22. Bauteilverbindung nach einem der Ansprüche 20 oder 21,
**dadurch gekennzeichnet, dass** der Klemmkragen bzw. die Klemmkrägen (5, 5a, 5b, 5c) so umgebogen ist bzw. sind, dass er bzw. sie in Einführrichtung bzw. entgegen der Einführrichtung von einem der beiden Bauteile absteht bzw. abstehen.

23. Bauteilverbindung nach einem der vorangehenden Ansprüche, **dadurch gekennzeichnet, dass** es sich bei mindestens einem der beiden Bauteile (1, 3) um ein Stahl- oder Aluminium-Blechbauteil handelt.

24. Bauteilverbindung nach einem der vorangehenden Ansprüche,
**dadurch gekennzeichnet, dass** es sich bei mindestens einem der beiden Bauteile (1, 3) um ein Karosseriebauteil einer Fahrzeugkarosserie handelt.

25. Bauteilverbindung nach einem der vorangegangenen Ansprüche,
**dadurch gekennzeichnet, dass** die Bauteile (1, 3) stoffschlüssig miteinander verbunden sind.

26. Bauteilverbindung nach Anspruch 25,
**dadurch gekennzeichnet, dass** die beiden Bauteile (1, 3) miteinander verschweißt sind.

## Claims

1. Component connection, comprising
• a first component (1),
• a second component (3),
• at least two pairs of fixing elements (2a, 4a; 2b, 4b; 2c, 4c) which are arranged spaced apart from one another and by means of which the two components (1, 3) are releasably connected to each other, wherein
o each pair of fixing elements (2a, 4a; 2b, 4b; 2c, 4c) is formed by a female fixing element (4a, 4b, 4c) and a male fixing element (2a, 2b, 2c) which is introduced, in particular plugged, into the female fixing element (4a, 4b, 4c), and
o in each case one fixing element (2a - 2c) of each pair of fixing elements (2a, 4a; 2b, 4b; 2c, 4c) is provided on the first component (1) and the other fixing element (4a - 4c) of each pair of fixing elements (2a, 4a; 2b, 4b; 2c, 4c) is provided on the second component (3),
wherein the fixing elements (2a - 2c; 4a - 4c) are arranged in such a manner that, when the two components (1, 3) are releasably connected by means of the pairs of fixing elements (2a, 4a; 2b, 4b; 2c, 4c) in the two components (1, 3), a bending stress bending the components (1, 3) is produced,
**characterized in that**
• the fixing elements (2a - 2c; 4a - 4c) are arranged in such a manner that the distance (X2), as measured along a surface of the first component (1), between the fixing elements (2b, 2c) provided on the first component (1) differs from the distance (xi), as measured along a surface of the second component (3), between the associated fixing elements (4b, 4c) provided on the second component, wherein, when the two components (1, 3) are releasably connected by means of the pairs of fixing elements (2a, 4a; 2b, 4b; 2c, 4c) in the two components (1, 3), a bending stress bending the components (1, 3) in the region between the pairs of fixing elements (2a, 4a; 2b, 4b; 2c, 4c) is produced.

2. Component connection according to Claim 1,
**characterized in that** the male fixing element (2a - 2c) of each pair of fixing elements (2a, 4a; 2b, 4b; 2c, 4c) is introduced along an introducing direction (6) into the female fixing element (4a, 4c) provided on the other component (3) and is clamped on said fixing element.

3. Component connection according to either of Claims 1 and 2,
**characterized in that**, after the releasable connection, the two components (1, 3) are fixed non-displaceably relative to each other in directions transversely with respect to the introducing directions (6).

4. Component connection according to one of the preceding claims,
**characterized in that** the fixing elements of each component connection form a clip or snap connection, wherein the fixing elements of each pair of fixing elements (2a, 4a; 2b, 4b; 2c, 4c) are latched to one another or engage with one another from behind in a form-fitting manner.

5. Component connection according to one of the preceding claims,
**characterized in that** the fixing elements of each pair of fixing elements (2a, 4a; 2b, 4b; 2c, 4c) are clamped to one another in a force-fitting manner.

6. Component connection according to one of the preceding claims,
**characterized in that** the fixing elements of each pair of fixing elements (2a, 4a; 2b, 4b; 2c, 4c) are clamped to one another in a force-fitting and form-fitting manner.

7. Component connection according to one of the preceding claims,
**characterized in that** the male fixing element (2a, 2c) of each pair of fixing elements (2a, 4a; 2b, 4b; 2c, 4c) is oversized with respect to the associated female fixing element (4a - 4c).

8. Component connection according to one of Claims 1 to 7,
**characterized in that** at least one of the male fixing elements of at least one of the pair of fixing elements (2a, 4a; 2b, 4b; 2c, 4c) is entirely or partially spherical or spheroidal or has a spherical or spheroidal portion.

9. Component connection according to one of Claims 1 to 8,
**characterized in that** at least one of the male fixing elements (2a - 2c) of at least one of the pairs of fixing elements (2a, 4a; 2b, 4b; 2c, 4c) is an element composed entirely of metal, in particular of steel or aluminium.

10. Component connection according to one of Claims 1 to 9,
**characterized in that** at least one of the male fixing elements is welded to one of the two components (1).

11. Component connection according to one of the preceding claims,
**characterized in that** at least one of the male fixing elements (2)
• has a functional head (2') which partially or entirely has the shape of a sphere or entirely or partially a spheroidal shape, and
• a foot portion (2") which is connected to the functional head (2').

12. Component connection according to Claim 11,
**characterized in that** the foot portion (2") has been connected to one of the two components (1) by means of a cold joining process.

13. Component connection according to one of the preceding claims,
**characterized in that** the female fixing element (4a - 4c) of at least one of the pairs of fixing elements (2a, 4a; 2b, 4b; 2c, 4c) is partially or entirely formed by a through-hole provided in one of the two components (1, 3).

14. Component connection according to Claim 13,
**characterized in that** the through-hole (4a - 4c) has a shape differing from a circular shape.

15. Component connection according to either of Claims 13 and 14,
**characterized in that** the through-hole (4a - 4c) resembles a square or a triangle.

16. Component connection according to one of Claims 13, 14 or 15,
**characterized in that**, during the production of the through-hole (4a - 4c), an edge (5a, 5c) of the through-hole (4a - 4c) has been bent over and forms a flexurally elastic clamping element (5a, 5c) which protrudes from the relevant component (3) and, from the outside, exerts a clamping force, which acts substantially transversally with respect to the introducing direction, on an outer side of the associated male fixing element (2a - 2c).

17. Component connection according to one of Claims 13, 14, 15 or 16,
**characterized in that** the through-hole (4a - 4c) is punched out of one of the two components (3).

18. Component connection according to Claim 16,
**characterized in that** the at least one clamping element (5a - 5c) is a bent-over portion of one of the two components (3).

19. Component connection according to either of Claims 16 and 18,
**characterized in that**, after the two components (1, 3) are plugged together, the at least one clamping element (5a - 5c) engages behind and the associated male fixing element (2a - 2c) that interacts therewith.

20. Component connection according to one of Claims 16, 18 or 19,
**characterized in that** the clamping element (5a - 5c) is a clamping collar extending along the entire edge of the through-hole (4a - 4c).

21. Component connection according to one of Claims 13 to 20,
**characterized in that** a plurality of clamping collars (5a, 5b, 5c) which are spaced apart from one another in the circumferential direction are provided along the edge of the through-hole (4a - 4c), said clamping collars on a peripheral portion making contact with the associated male fixing element (2, 2a, 2b) from the outside.

22. Component connection according to either of Claims 20 and 21,
**characterized in that** the clamping collar or the clamping collars (5, 5a, 5b, 5c) is or are bent over in such a manner that it or they protrudes or protrude in the introducing direction or counter to the introducing direction from one of the two components.

23. Component connection according to one of the preceding claims,
**characterized in that** at least one of the two components (1, 3) is a steel or aluminium sheet-metal component.

24. Component connection according to one of the preceding claims,
**characterized in that** at least one of the two components (1, 3) is a body component of a vehicle body.

25. Component connection according to one of the preceding claims,
**characterized in that** the components (1, 3) are connected to each other in an integrally bonded manner.

26. Component connection according to Claim 25,
**characterized in that** the two components (1, 3) are welded to each other.

## Revendications

1. Connexion de composants, comprenant
• un premier composant (1),
• un deuxième composant (3),
• au moins deux paires d'éléments de fixation (2a, 4a ; 2b, 4b ; 2c, 4c) disposées à distance les unes des autres, au moyen desquelles les deux composants (1, 3) sont connectés l'un à l'autre de manière desserrable,
o chaque paire d'éléments de fixation (2a, 4a ; 2b, 4b ; 2c, 4c) étant formée par un élément de fixation femelle (4a, 4b, 4c) et un élément de fixation mâle (2a, 2b, 2c) introduit, en particulier enfiché, dans l'élément de fixation femelle (4a, 4b, 4c), et
o un élément de fixation (2a - 2c) de chaque paire d'éléments de fixation (2a, 4a ; 2b, 4b ; 2c, 4c) étant à chaque fois prévu au niveau du premier composant (1) et l'autre élément de fixation (4a - 4c) de chaque paire d'éléments de fixation (2a, 4a ; 2b, 4b ; 2c, 4c) étant à chaque fois prévu au niveau du deuxième composant (3),
les éléments de fixation (2a - 2c ; 4a - 4c) étant disposés de telle sorte que lors de la connexion détachable des deux composants (1, 3) au moyen des paires d'éléments de fixation (2a, 4a ; 2b, 4b ; 2c, 4c) , il se produise dans les deux composants (1, 3) une contrainte de flexion faisant fléchir les composants (1, 3),
**caractérisée en ce que**
• les éléments de fixation (2a - 2c ; 4a - 4c) sont disposés de telle sorte que la distance (X2), mesurée le long d'une surface du premier composant (1), entre les éléments de fixation (2b, 2c) prévus au niveau du premier composant (1), soit différente de la distance (xi) mesurée le long d'une surface du deuxième composant (3), entre les éléments de fixation (4b, 4c) associés, prévus au niveau du deuxième composant, une contrainte de flexion, faisant fléchir les composants (1, 3) dans la région entre les paires d'éléments de fixation (2a, 4a ; 2b, 4b ; 2c, 4c), se produisant dans les deux composants (1, 3) lors de la connexion détachable des deux composants (1, 3) au moyen des paires d'éléments de fixation (2a, 4a ; 2b, 4b ; 2c, 4c).

2. Connexion de composants selon la revendication 1,
**caractérisée en ce que** l'élément de fixation mâle (2a - 2c) de chaque paire d'éléments de fixation (2a, 4a ; 2b, 4b ; 2c, 4c) est introduit le long d'une direction d'introduction (6) dans l'élément de fixation femelle (4a - 4c) prévu au niveau de l'autre composant (3) et est serré fixement à celui-ci.

3. Connexion de composants selon l'une quelconque des revendications 1 et 2,
**caractérisée en ce que** les deux composants (1, 3) après la connexion détachable, sont fixés l'un par rapport à l'autre de manière non déplaçable dans des directions transversales aux directions d'introduction (6).

4. Connexion de composants selon l'une quelconque des revendications précédentes,
**caractérisée en ce que** les éléments de fixation de chaque connexion de composants forment une connexion à enclipsage ou à encliquetage, les éléments de fixation de chaque paire d'éléments de fixation (2a, 4a ; 2b, 4b ; 2c, 4c) étant encliquetés l'un dans l'autre ou venant en prise par l'arrière l'un avec l'autre par engagement par correspondance de formes.

5. Connexion de composants selon l'une quelconque des revendications précédentes,
**caractérisée en ce que** les éléments de fixation de chaque paire d'éléments de fixation (2a, 4a ; 2b, 4b ; 2c, 4c) sont serrés l'un contre l'autre par engagement par force.

6. Connexion de composants selon l'une quelconque des revendications précédentes,
**caractérisée en ce que** les éléments de fixation de chaque paire d'éléments de fixation (2a, 4a ; 2b, 4b ; 2c, 4c) sont serrés l'un contre l'autre par engagement par force et par correspondance de formes.

7. Connexion de composants selon l'une quelconque des revendications précédentes,
**caractérisée en ce que** l'élément de fixation mâle (2a, 2c) de chaque paire d'éléments de fixation (2a, 4a ; 2b, 4b ; 2c, 4c) présente un surdimensionnement par rapport à l'élément de fixation femelle associé (4a - 4c).

8. Connexion de composants selon l'une quelconque des revendications 1 à 7,
**caractérisée en ce qu'**au moins l'un des éléments de fixation mâles d'au moins l'une des paires d'éléments de fixation (2a, 4a ; 2b, 4b ; 2c, 4c) est complètement ou en partie sphérique ou quasi-sphérique ou présente une portion de forme sphérique ou quasi-sphérique.

9. Connexion de composants selon l'une quelconque des revendications 1 à 8,
**caractérisée en ce qu'**au moins l'un des éléments de fixation mâles (2a - 2c) d'au moins l'une des paires d'éléments de fixation (2a, 4a ; 2b, 4b ; 2c, 4c) est un élément constitué entièrement de métal, en particulier d'acier ou d'aluminium.

10. Connexion de composants selon l'une quelconque des revendications 1 à 9,
**caractérisée en ce qu'**au moins l'un des éléments de fixation mâles est soudé à l'un des deux composants (1) .

11. Connexion de composants selon l'une quelconque des revendications précédentes,
**caractérisée en ce qu'**au moins l'un des éléments de fixation mâle (2)
• présente une tête fonctionnelle (2') qui présente en partie ou complètement la forme d'une sphère ou en partie ou complètement une forme quasi-sphérique et
• une portion de base (2'') connectée à la tête fonctionnelle (2').

12. Connexion de composants selon la revendication 11,
**caractérisée en ce que** la portion de base (2'') a été connectée à l'un des deux composants (1) au moyen d'un procédé d'assemblage à froid.

13. Connexion de composants selon l'une quelconque des revendications précédentes,
**caractérisée en ce que** l'élément de fixation femelle (4a - 4c) d'au moins l'une des paires d'éléments de fixation (2a, 4a ; 2b, 4b ; 2c, 4c) est formé en partie ou complètement par un trou traversant prévu dans l'un des deux composants (1, 3).

14. Connexion de composants selon la revendication 13,
**caractérisée en ce que** le trou traversant (4a - 4c) présente une forme s'écartant d'une forme circulaire.

15. Connexion de composants selon l'une quelconque des revendications 13 et 14,
**caractérisée en ce que** le trou traversant (4a - 4c) a une forme similaire à un carré ou un triangle.

16. Connexion de composants selon l'une quelconque des revendications 13, 14 ou 15,
**caractérisée en ce que** lors de la fabrication du trou traversant (4a - 4c), un bord (5a, 5c) du trou traversant (4a - 4c) a été recourbé et forme un élément de serrage flexible élastique (5a, 5c) saillant depuis le composant concerné (3), lequel exerce depuis l'extérieur une force de serrage agissant essentiellement transversalement à la direction d'introduction sur un côté extérieur de l'élément de fixation mâle associé (2a - 2c).

17. Connexion de composants selon l'une quelconque des revendications 13, 14, 15 ou 16,
**caractérisée en ce que** le trou traversant (4a - 4c) est estampé dans l'un des deux composants (3).

18. Connexion de composants selon la revendication 16, **caractérisée en ce que** l'au moins un élément de serrage (5a - 5c) est une portion recourbée de l'un des deux composants (3).

19. Connexion de composants selon l'une quelconque des revendications 16 et 18,
**caractérisée en ce qu'**après l'enfichage l'un dans l'autre des deux composants (1, 3), l'au moins un élément de serrage (5a - 5c) vient en prise par l'arrière et l'élément de fixation mâle associé (2a - 2c) coopérant avec lui.

20. Connexion de composants selon l'une quelconque des revendications 16, 18 ou 19,
**caractérisée en ce que** l'élément de serrage (5a - 5c) est une patte de serrage s'étendant le long de tout le bord du trou traversant (4a - 4c).

21. Connexion de composants selon l'une quelconque des revendications 13 à 20,
**caractérisée en ce que** plusieurs pattes de serrage (5a, 5b, 5c) espacées les unes des autres dans la direction périphérique sont prévues le long du bord du trou traversant (4a - 4c), lesquelles viennent en contact depuis l'extérieur avec l'élément de fixation mâle associé (2, 2a, 2b) sur une portion de la périphérie.

22. Connexion de composants selon l'une quelconque des revendications 20 et 21,
**caractérisée en ce que** la patte de serrage ou les pattes de serrage (5, 5a, 5b, 5c) sont repliées de telle sorte qu'elles fassent saillie dans la direction d'introduction ou dans le sens opposé à la direction d'introduction depuis l'un des deux composants.

23. Connexion de composants selon l'une quelconque des revendications précédentes,
**caractérisée en ce qu'**au moins l'un des deux composants (1, 3) est un composant en tôle d'acier ou d'aluminium.

24. Connexion de composants selon l'une quelconque des revendications précédentes,
**caractérisée en ce qu'**au moins l'un des deux composants (1, 3) est un composant de carrosserie d'une carrosserie de véhicule.

25. Connexion de composants selon l'une quelconque des revendications précédentes,
**caractérisée en ce que** les composants (1, 3) sont connectés par liaison de matière l'un avec l'autre.

26. Connexion de composants selon la revendication 25,
**caractérisée en ce que** les deux composants (1, 3) sont soudés l'un à l'autre.
